# EUROPEAN PATENT APPLICATION

(11) **EP 4 672 414 A1**
(43) Date of publication of application: **31.12.2025**
(21) Application number: 23943220.6
(22) Date of filing: 10.10.2023
(51) Int. Cl.: H01M 10/0569, H01M 10/0568, H01M 10/054

(54) **ELECTROLYTE, SODIUM SECONDARY BATTERY AND ELECTRIC DEVICE**

(30) Priority: 30.06.2023 CN 202310799078
(71) Applicant: Contemporary Amperex Technology Co., Limited, Ningde, Fujian 352100 (CN)
(72) Inventor: WU, Kai, Ningde, Fujian 352100 (CN); LI, Xiaolong, Ningde, Fujian 352100 (CN); GUO, Bingkun, Ningde, Fujian 352100 (CN); ZHANG, Xinxin, Ningde, Fujian 352100 (CN); CHEN, Shigang, Ningde, Fujian 352100 (CN); YAO, Shikang, Ningde, Fujian 352100 (CN); LIU, Ben, Ningde, Fujian 352100 (CN); ZHOU, Qicheng, Ningde, Fujian 352100 (CN); LAN, Jiadian, Ningde, Fujian 352100 (CN)
(74) Representative: Kraus & Lederer PartGmbB
(86) International application number: PCT/CN2023/123834
(87) International publication number: WO 2025/000741

(57) **Abstract**

An electrolyte, a sodium secondary battery and an electric device. The electrolyte comprises a first sodium salt and a first solvent, wherein the first sodium salt comprises sodium trifluoromethanesulfonate, and the first solvent has a structure as shown in formula I, with the mass ratio of the first sodium salt to the first solvent being 0.01-0.4. The electrolyte has a good low-temperature ionic conductivity, which is beneficial for improving the low-temperature cycling performance and low-temperature coulombic efficiency of the battery.

## Description

### CROSS-REFERENCE

The present application refers to Chinese Patent Application No. 202310799078.3 filed on June 30, 2023, and entitled "ELECTROLYTE, SODIUM SECONDARY BATTERY AND ELECTRIC DEVICE", which is incorporated herein by reference in its entirety.

### TECHNICAL FIELD

The present application relates to the technical field of secondary batteries, and in particular, to an electrolytic solution, a sodium secondary battery, and an electric device.

### BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, military equipment, and aerospace.

The performance of the electrolytic solution has a critical influence on the performance of secondary batteries. At present, the electrolytic solution has multiple defects and cannot meet the application requirements of the new generation of electrochemical systems.

### SUMMARY

In view of the problems described in the background, the present application provides an electrolytic solution, which is intended to improve the low-temperature ionic conductivity of the electrolytic solution, as well as the low-temperature cycle performance and low-temperature coulombic efficiency of a battery adopting the electrolytic solution.

A first aspect of the present application provides an electrolytic solution for a sodium secondary battery. The electrolytic solution includes a first sodium salt and a first solvent, the first sodium salt including sodium trifluoromethanesulfonate, and the first solvent having a structure represented by formula I: 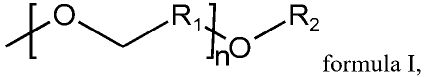
where R₁ and R₂ each independently include CH₂ or CH₂CH₂, and n = 1, 2, 3, or 4;
a mass ratio of the first sodium salt to the first solvent is 0.01-0.4.

The ethylene oxygen group in the first solvent can coordinate with the sodium ion in sodium trifluoromethanesulfonate. In one aspect, controlling the number of carbon atoms and the number of repeated structural units n between two adjacent oxygens in the first solvent facilitates the chelate coordination of the first solvent with the sodium ion in sodium trifluoromethanesulfonate to form a relatively stable solvation structure with a five-membered ring or six-membered ring, such that sodium trifluoromethanesulfonate, at a low temperature, has relatively high solubility in the first solvent having the structure represented by formula I, thereby enabling the electrolytic solution to have excellent low-temperature ionic conductivity; at the same time, controlling the number of the repeated structural units n can allow the electrolytic solution to have appropriate viscosity, and then the low-temperature ionic conductivity of the electrolytic solution and the compatibility between the electrolytic solution and the positive and negative electrode plates are balanced, and thus the battery is allowed to have excellent low-temperature cycle performance and low-temperature coulombic efficiency. In another aspect, controlling the mass ratio of the first sodium salt to the first solvent to be within an appropriate range can not only provide a sufficient amount of the first solvent to fully dissolve the first sodium salt, but also meet the concentration requirement for the first sodium salt to enable the electrolytic solution to have excellent ionic conductivity, thereby improving the low-temperature cycle performance and the low-temperature coulombic efficiency of the battery. Additionally, since sodium trifluoromethanesulfonate, at a low temperature, has relatively high solubility in the first solvent having the structure represented by formula I, the electrolytic solution system thereof can still maintain excellent cycle performance in the case that a low temperature of 0 °C is lowered to a low temperature of -30 °C.

In any embodiment, the electrolytic solution further includes a second sodium salt. The second sodium salt includes one or more of sodium bis(fluorosulfonyl)imide, sodium hexafluorophosphate, sodium tetrafluoroborate, sodium hexafluoroarsenate, and sodium tetraphenylboronate, and optionally includes one or more of sodium hexafluorophosphate, sodium tetrafluoroborate, sodium hexafluoroarsenate, and sodium tetraphenylboronate.

The introduction of the second sodium salt into the electrolytic solution is conducive to improving the room-temperature cycle performance of the battery.

In any embodiment, based on the total mass of the electrolytic solution, the mass content of the first sodium salt is 0.6%-24%, and optionally 2%-12%; and/or
based on the total mass of the electrolytic solution, a mass content of the second sodium salt is 3%-40%, and optionally 8%-20%.

Controlling the mass content of the first sodium salt to be within an appropriate range can not only provide a sufficient amount of the first sodium salt to dissolve in the first solvent, so as to enable the electrolytic solution to have excellent low-temperature ionic conductivity, and the battery adopting the electrolytic solution to have excellent low-temperature cycle performance and low-temperature coulombic efficiency, but also control the extent of the interfacial side reaction between the first sodium salt and the negative electrode plate. Controlling the mass content of the second sodium salt to be within an appropriate range can not only provide a sufficient amount of the second sodium salt to enable the battery to have excellent room-temperature cycle performance, but also improve the low-temperature cycle performance of the battery to some extent.

In any embodiment, the first solvent includes one or more of diethylene glycol dimethyl ether, triethylene glycol dimethyl ether, and tetraethylene glycol dimethyl ether, and optionally includes diethylene glycol dimethyl ether.

The first sodium salt has relatively high low-temperature solubility in the first solvent described above, such that the electrolytic solution has excellent ionic conductivity.

In any embodiment, the mass ratio of the first sodium salt to the first solvent is 0.05-0.2.

Further controlling the mass ratio of the first sodium salt to the first solvent to be 0.05-0.2 can balance the low-temperature ionic conductivity of the electrolytic solution, as well as the low-temperature cycle performance and the low-temperature coulombic efficiency of the battery adopting the electrolytic solution.

In any embodiment, based on the total mass of the electrolytic solution, the mass content of the first solvent is no less than 20%, and optionally 40%-80%.

Controlling the mass content of the first solvent to be within an appropriate range can provide a sufficient amount of the first solvent to fully dissolve the first sodium salt, such that the electrolytic solution has excellent low-temperature ionic conductivity, thereby improving the low-temperature cycle performance and low-temperature coulombic efficiency of the battery.

In any embodiment, the electrolytic solution further includes a second solvent, a freezing point of the second solvent is lower than a freezing point of the first solvent, and optionally, the freezing point of the second solvent is lower than -65 °C.

The introduction of the second solvent with a freezing point lower than the freezing point of the first solvent into the electrolytic solution is conducive to further lowering the freezing point of the electrolytic solution, thereby greatly improving the ionic conductivity of the electrolytic solution at a low temperature, and improving the low-temperature cycle performance of the battery.

In any embodiment, the second solvent includes a cyclic ether solvent. The cyclic ether solvent includes one or more of 1,3-dioxolane, 1,4-dioxane, tetrahydrofuran, and methyl tetrahydrofuran, and optionally includes 1,3-dioxolane; and/or

based on the total mass of the electrolytic solution, a mass content of the second solvent is no less than 10%, and optionally 20%-70%.

Controlling the mass content of the second solvent to be within an appropriate range effectively improves the ionic conductivity of the electrolytic solution at a low temperature, and improves the low-temperature cycle performance of the battery.

In any embodiment, the electrolytic solution further includes a third solvent, and a binding force between the third solvent and an anion of the first sodium salt is greater than a binding force between the first solvent and an anion of the first sodium salt.

Since the anion in the sodium trifluoromethanesulfonate has a strong polarization effect on the outer-sphere weakly coordinated structure of the solvation structure formed by the coordination of the first solvent with the sodium ion, the first solvent molecule is prone to oxidation on the surface of the positive electrode plate, causing overcharge of the battery at a low temperature. However, the introduction of the third solvent can change the solvation structure between the first solvent and the sodium trifluoromethanesulfonate. Since the binding force between the third solvent and the anion in the sodium trifluoromethanesulfonate is stronger than the binding force between the first solvent and the anion in the sodium trifluoromethanesulfonate, the polarization effect of the anion in the sodium trifluoromethanesulfonate on the outer-sphere weakly coordinated structure of the solvation structure formed by the coordination of the first solvent with the sodium ion is reduced. Therefore, the degree of the oxidation of the first solvent molecule on the surface of the positive electrode plate can be reduced, and the third solvent has stronger oxidation resistance, thereby effectively inhibiting overcharge of the battery, and improving the coulombic efficiency of the battery at a low temperature.

In any embodiment, the third solvent includes one or more of ethylene glycol diethyl ether, ethylene glycol dipropyl ether, propylene glycol dimethyl ether, and diethylene glycol diethyl ether, and optionally includes one or more of ethylene glycol diethyl ether and diethylene glycol diethyl ether; and/or
based on the total mass of the electrolytic solution, a mass content of the third solvent is no less than 10%, and optionally 15%-40%.

The third solvent described above can effectively reduce the degree of oxidation of the first solvent molecule on the surface of the positive electrode plate. For example, ethylene glycol diethyl ether, ethylene glycol dipropyl ether, or diethylene glycol diethyl ether, due to the presence of ethyl or propyl, can increase the steric hindrance of α hydrogen on terminal group C, or propylene glycol dimethyl ether forms a six-membered ring structure to change the coordination structure, all of which can reduce the polarization effect of the anion in sodium trifluoromethanesulfonate on the outer-sphere weakly coordinated structure of the solvation structure formed by the coordination of the first solvent with the sodium ion, reduce the degree of oxidation of the first solvent molecule on the surface of the positive electrode plate, and make the third solvent more resistant to oxidation, thereby effectively inhibiting the overcharge of the battery, and improving the coulombic efficiency of the battery at a low temperature. Controlling the mass content of the third solvent to be within an appropriate range can effectively improve the low-temperature coulombic efficiency of the battery.

A second aspect of the present application provides a sodium secondary battery. The sodium secondary battery includes the electrolytic solution according to the first aspect.

In any embodiment, the sodium secondary battery is a negative electrode-free sodium secondary battery.

The negative electrode-free sodium secondary battery has a high energy density.

In any embodiment, the sodium secondary battery includes a negative electrode plate, and the negative electrode plate includes a negative electrode current collector and a bottom coating formed on at least part of a surface of the negative electrode current collector.

In any embodiment, the bottom coating includes a conductive carbon coating. The conductive coating includes one or more of a single-walled carbon nanotube, a multi-walled carbon nanotube, hard carbon, super P, graphite, graphene, a silver-carbon composite nanoparticle, and a tin-carbon composite nanoparticle, and optionally includes one or more of a single-walled carbon nanotube and a multi-walled carbon nanotube.

The bottom coating described above not only has excellent electrical conductivity, but also is conducive to the uniform deposition of the metal ion on the surface of the current collector, thereby improving the cycle performance and coulombic efficiency of the battery.

In any embodiment, the areal density of the conductive carbon coating is 5 g/m² to 50 g/m².

The bottom coating with an areal density of 5 g/m² to 50 g/m² is conducive to the uniform distribution of nucleation sites, promotes the uniform deposition of metals, and meanwhile, does not affect the transmission of electrons.

A third aspect of the present application provides an electric device. The electric device includes the sodium secondary battery according to the second aspect of the present application.

### BRIEF DESCRIPTION OF THE DRAWINGS

FIG. 1 is a schematic view of a sodium secondary battery according to one specific embodiment of the present application;
FIG. 2 is an exploded view of the sodium secondary battery according to one specific embodiment of the present application shown in FIG. 1;
FIG. 3 is a schematic view of a battery module according to one specific embodiment of the present application;
FIG. 4 is a schematic view of a battery pack according to one specific embodiment of the present application;
FIG. 5 is an exploded view of the battery pack according to one specific embodiment of the present application shown in FIG. 4; and
FIG. 6 is a schematic view of an electric device using a sodium secondary battery as a power source according to one specific embodiment of the present application.

### Description of the reference numerals:

1: battery pack; 2: upper case body; 3: lower case body; 4: battery module; 5: sodium secondary battery; 51: housing; 52: electrode assembly; 53: cover plate.

### DETAILED DESCRIPTION

Hereinafter, embodiments of the electrolytic solution, the secondary battery, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

The low-temperature solubility of the electrolyte salt of the electrolytic solution in the solvent significantly affects the low-temperature performance of the battery. For example, at - 20 °C, the solubility of sodium hexafluorophosphate in ether solvents is low, and the sodium hexafluorophosphate is prone to crystallization, resulting in poor cycle performance of the battery and limited application scenarios of the battery. Therefore, an electrolytic solution system needs to be designed to enable batteries adopting the electrolytic solution system to have excellent low-temperature performance and expand the application of batteries.

### [Electrolytic Solution]

Based on this, the present application provides an electrolytic solution for a sodium secondary battery. The electrolytic solution includes a first sodium salt and a first solvent. The first sodium salt includes sodium trifluoromethanesulfonate (NaOTf), and the first solvent has a structure represented by formula I: 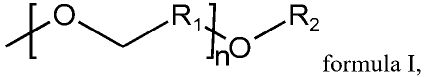
where R₁ and R₂ each independently include CH₂ or CH₂CH₂, and n = 1, 2, 3, or 4;
the mass ratio of the first sodium salt to the first solvent is 0.01-0.4.

In some embodiments, the mass ratio of the first sodium salt to the first solvent is optionally 0.01, 0.02, 0.05, 0.1, 0.15, 0.2, 0.25, 0.3, 0.35, 0.4, or a value in a range defined by any two of the values described above.

It can be understood that the ethylene oxygen group in the first solvent can coordinate with the sodium ion in sodium trifluoromethanesulfonate. In one aspect, controlling the number of carbon atoms and the number of repeated structural units n between two adjacent oxygens in the first solvent facilitates the chelate coordination of the first solvent with the sodium ion in sodium trifluoromethanesulfonate to form a relatively stable solvation structure with a five-membered ring or six-membered ring, such that sodium trifluoromethanesulfonate, at a low temperature, has relatively high solubility in the first solvent having a structure represented by formula I, thereby enabling the electrolytic solution to have excellent low-temperature ionic conductivity; at the same time, controlling the number of the repeated structural units n can allow the electrolytic solution to have appropriate viscosity, and then the low-temperature ionic conductivity of the electrolytic solution and the compatibility between the electrolytic solution and the positive and negative electrode plates are balanced, and thus the battery is allowed to have excellent low-temperature cycle performance and low-temperature coulombic efficiency. In another aspect, controlling the mass ratio of the first sodium salt to the first solvent to be within an appropriate range can not only provide a sufficient amount of the first solvent to fully dissolve the first sodium salt, but also meet the concentration requirement for the first sodium salt to enable the electrolytic solution to have excellent ionic conductivity, thereby improving the low-temperature cycle performance and the low-temperature coulombic efficiency of the battery. Additionally, since sodium trifluoromethanesulfonate, at a low temperature, has relatively high solubility in the first solvent having the structure represented by formula I, the electrolytic solution system thereof can still maintain excellent cycle performance in the case that a low temperature of 0 °C is lowered to a low temperature of -30 °C.

As used herein, the term "low temperature" refers to a temperature of 0 °C to -30 °C, including 0 °C and -30 °C.

In some embodiments, the electrolytic solution further includes a second sodium salt. The second sodium salt includes one or more of sodium bis(fluorosulfonyl)imide (NaFSI), sodium hexafluorophosphate (NaPF₆), sodium tetrafluoroborate (NaBF₄), sodium hexafluoroarsenate (NaAsF₆), and sodium tetraphenylboronate ((NaBPh₄), and optionally includes one or more of sodium hexafluorophosphate, sodium tetrafluoroborate, sodium hexafluoroarsenate, and sodium tetraphenylboronate.

In some embodiments, the second sodium salt includes sodium hexafluorophosphate. In some embodiments, the second sodium salt includes sodium tetrafluoroborate. In some embodiments, the second sodium salt includes sodium hexafluoroarsenate. In some embodiments, the second sodium salt includes sodium tetraphenylboronate.

It can be understood that the first sodium salt has high low-temperature solubility in the first solvent, such that the electrolytic solution has excellent low-temperature ionic conductivity. However, the first sodium salt undergoes a severe interfacial side reaction with the negative electrode plate at room temperature, resulting in deteriorated room-temperature cycle performance of the battery. The second sodium salt is relatively stable at room temperature. Therefore, the introduction of the second sodium salt into the electrolytic solution is conducive to improving the room-temperature cycle performance of the battery.

In some embodiments, based on the total mass of the electrolytic solution, the mass content of the first sodium salt is 0.6%-24%, and optionally 2%-12%. In some embodiments, based on the total mass of the electrolytic solution, the mass content of the first sodium salt is optionally 0.6%, 1%, 2%, 4%, 5%, 6%, 8%, 10%, 12%, 14%, 15%, 16%, 18%, 20%, 22%, 24%, or a value in a range defined by any two of the values described above.

In some embodiments, based on the total mass of the electrolytic solution, the mass content of the second sodium salt is 3%-40%, and optionally 8%-20%. In some embodiments, based on the total mass of the electrolytic solution, the mass content of the second sodium salt is optionally 3%, 5%, 8%, 10%, 15%, 20%, 25%, 30%, 35%, 40%, or a value in a range defined by any two of the values described above.

Controlling the mass content of the first sodium salt to be within an appropriate range can not only provide a sufficient amount of the first sodium salt to dissolve in the first solvent, so as to enable the electrolytic solution to have excellent low-temperature ionic conductivity, and the battery adopting the electrolytic solution to have excellent low-temperature cycle performance and low-temperature coulombic efficiency, but also control the extent of the interfacial side reaction between the first sodium salt and the negative electrode plate. Controlling the mass content of the second sodium salt to be within an appropriate range can not only provide a sufficient amount of the second sodium salt to enable the battery to have excellent room-temperature cycle performance, but also improve the low-temperature cycle performance of the battery to some extent.

In some embodiments, the first solvent includes one or more of diethylene glycol dimethyl ether, triethylene glycol dimethyl ether, and tetraethylene glycol dimethyl ether, and optionally includes diethylene glycol dimethyl ether. In some embodiments, the first solvent includes diethylene glycol dimethyl ether. In some embodiments, the first solvent includes triethylene glycol dimethyl ether. In some embodiments, the first solvent includes tetraethylene glycol dimethyl ether.

In some embodiments, the first sodium salt includes sodium trifluoromethanesulfonate, the second sodium salt includes sodium hexafluorophosphate, and the first solvent includes diethylene glycol dimethyl ether. In some embodiments, the first sodium salt includes sodium trifluoromethanesulfonate, the second sodium salt includes sodium tetrafluoroborate, and the first solvent includes diethylene glycol dimethyl ether. In some embodiments, the first sodium salt includes sodium trifluoromethanesulfonate, the second sodium salt includes sodium hexafluoroarsenate, and the first solvent includes diethylene glycol dimethyl ether.

The first sodium salt has relatively high low-temperature solubility in the first solvent described above, such that the electrolytic solution has excellent ionic conductivity.

In some embodiments, the mass ratio of the first sodium salt to the first solvent is 0.05-0.2.

Further controlling the mass ratio of the first sodium salt to the first solvent to be 0.05-0.2 can balance the low-temperature ionic conductivity of the electrolytic solution, as well as the low-temperature cycle performance and the low-temperature coulombic efficiency of the battery adopting the electrolytic solution.

In some embodiments, based on the total mass of the electrolytic solution, the mass content of the first solvent is no less than 20%, and optionally 40%-80%. In some embodiments, based on the total mass of the electrolytic solution, the mass content of the first solvent is optionally 20%, 25%, 30%, 35%, 40%, 45%, 50%, 55%, 60%, 65%, 70%, 75%, 80%, or a value in a range defined by any two of the values described above.

Controlling the mass content of the first solvent to be within an appropriate range can provide a sufficient amount of the first solvent to fully dissolve the first sodium salt, such that the electrolytic solution has excellent low-temperature ionic conductivity, thereby improving the low-temperature cycle performance and low-temperature coulombic efficiency of the battery.

In some embodiments, the electrolytic solution further includes a second solvent. The freezing point of the second solvent is lower than the freezing point of the first solvent, and optionally, the freezing point of the second solvent is lower than -65 °C.

As used herein, the term "freezing point" refers to the temperature at which the first solvent or the second solvent solidifies under atmospheric pressure (0.1 MPa).

The introduction of the second solvent with a freezing point lower than the freezing point of the first solvent into the electrolytic solution is conducive to further lowering the freezing point of the electrolytic solution, thereby greatly improving the ionic conductivity of the electrolytic solution at a low temperature, and improving the low-temperature cycle performance of the battery.

In some embodiments, the second solvent includes a cyclic ether solvent. The cyclic ether solvent includes one or more of 1,3-dioxolane (DOL), 1,4-dioxane, tetrahydrofuran (THF), and methyl tetrahydrofuran, and optionally includes 1,3-dioxolane. In some embodiments, the cyclic ether solvent includes 1,4-dioxane. In some embodiments, the cyclic ether solvent includes tetrahydrofuran. In some embodiments, the cyclic ether solvent includes methyl tetrahydrofuran.

In some embodiments, based on the total mass of the electrolytic solution, the mass content of the second solvent is no less than 10%, and optionally 20%-70%. In some embodiments, based on the total mass of the electrolytic solution, the mass content of the second solvent is optionally 10%, 15%, 20%, 25%, 30%, 35%, 40%, 45%, 50%, 55%, 60%, 65%, 70%, or a value in a range defined by any two of the values described above.

Controlling the mass content of the second solvent to be within an appropriate range effectively improves the ionic conductivity of the electrolytic solution at a low temperature, and improves the low-temperature cycle performance of the battery.

In some embodiments, the electrolytic solution further includes a third solvent, and the binding force between the third solvent and the anion of the first sodium salt is greater than the binding force between the first solvent and the anion of the first sodium salt.

It can be understood that since the anion in the sodium trifluoromethanesulfonate has a strong polarization effect on the outer-sphere weakly coordinated structure of the solvation structure formed by the coordination of the first solvent with the sodium ion, the first solvent molecule is prone to oxidation on the surface of the positive electrode plate, causing overcharge of the battery at a low temperature. However, the introduction of the third solvent can change the solvation structure between the first solvent and the sodium trifluoromethanesulfonate. Since the binding force between the third solvent and the anion in the sodium trifluoromethanesulfonate is stronger than the binding force between the first solvent and the anion in the sodium trifluoromethanesulfonate, the polarization effect of the anion in the sodium trifluoromethanesulfonate on the outer-sphere weakly coordinated structure of the solvation structure formed by the coordination of the first solvent with the sodium ion is reduced. Therefore, the degree of the oxidation of the first solvent molecule on the surface of the positive electrode plate can be reduced, and the third solvent has stronger oxidation resistance, thereby effectively inhibiting overcharge of the battery, and improving the coulombic efficiency of the battery at a low temperature.

As used herein, the term "overcharge of battery" means that the actual charge capacity deviates from the designed capacity of a battery due to an additional capacity introduced by a side reaction of an electrolytic solution. For a secondary battery, the overcharge is reflected in a decrease in coulombic efficiency of the battery.

In some embodiments, the third solvent includes one or more of ethylene glycol diethyl ether (DEE), ethylene glycol dipropyl ether, propylene glycol dimethyl ether (DME), and diethylene glycol diethyl ether, and optionally includes one or more of ethylene glycol diethyl ether and diethylene glycol diethyl ether. In some embodiments, the third solvent includes ethylene glycol diethyl ether. In some embodiments, the third solvent includes ethylene glycol diethyl ether. In some embodiments, the third solvent includes ethylene glycol dipropyl ether. In some embodiments, the third solvent includes propylene glycol dimethyl ether.

In some embodiments, based on the total mass of the electrolytic solution, the mass content of the third solvent is no less than 10%, and optionally 15%-40%. In some embodiments, based on the total mass of the electrolytic solution, the mass content of the third solvent is optionally 10%, 14%, 15%, 16%, 20%, 22%, 25%, 28%, 30%, 32%, 35%, 37%, 40%, or a value in a range defined by any two of the values described above.

The third solvent described above can effectively reduce the degree of oxidation of the first solvent molecule on the surface of the positive electrode plate. For example, ethylene glycol diethyl ether, ethylene glycol dipropyl ether, or diethylene glycol diethyl ether, due to the presence of ethyl or propyl, can increase the steric hindrance of α hydrogen on terminal group C, or propylene glycol dimethyl ether forms a six-membered ring structure to change the coordination structure, all of which can reduce the polarization effect of the anion in sodium trifluoromethanesulfonate on the outer-sphere weakly coordinated structure of the solvation structure formed by the coordination of the first solvent with the sodium ion, reduce the degree of oxidation of the first solvent molecule on the surface of the positive electrode plate, and make the third solvent more resistant to oxidation, thereby effectively inhibiting the overcharge of the battery, and improving the coulombic efficiency of the battery at a low temperature. Controlling the mass content of the third solvent to be within an appropriate range can effectively improve the low-temperature coulombic efficiency of the battery.

### [Positive Electrode Plate]

The positive electrode plate includes a positive electrode current collector and a positive electrode active substance layer formed on at least part of the surface of the positive electrode current collector. The positive electrode active substance layer includes a positive electrode active substance. The positive electrode active substance may include at least one of a layered transition metal oxide, a polyanionic compound, and a Prussian blue compound.

The transition metal in the layered transition metal oxide may be at least one of Mn, Fe, Ni, Co, Cr, Cu, Ti, Zn, V, Zr, and Ce. Optionally, the layered transition metal oxide is, for example, NaxMO₂, where M is one or more of Ti, V, Mn, Co, Ni, Fe, Cr, and Cu, and 0 < x ≤ 1.

The polyanionic compound may be a class of compounds having metal ions, transition metal ions, and tetrahedral (YO₄)ₙ₋ anion units. The metal ion is optionally one of sodium ion, lithium ion, potassium ion, and zinc ion; the transition metal is optionally at least one of Mn, Fe, Ni, Co, Cr, Cu, Ti, Zn, V, Zr, and Ce; Y is optionally at least one of P, S, and Si; n represents the valence state of (YO₄)ⁿ⁻.

The Prussian blue compound may be a class of compounds having sodium ions, transition metal ions, and cyanide ions (CN-). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, 0 < a ≤ 2, 0 < b < 1, and 0 < c < 1.

The positive electrode active substance layer may also include a conductive agent to improve the conductive performance of the positive electrode. The conductive agent is optionally one or more of super P, acetylene black, carbon black, Ketjen black, a carbon dot, a carbon nanotube, graphite, graphene, and a carbon nanofiber.

The positive electrode active substance layer may also include a binder to firmly bond the positive electrode active substance and the optional conductive agent to the positive electrode current collector. The binder is optionally at least one of polyvinylidene fluoride (PVDF), polytetrafluoroethylene (PTFE), polyacrylic acid (PAA), polyvinyl alcohol (PVA), ethylene-vinyl acetate copolymer (EVA), styrene-butadiene rubber (SBR), carboxymethylcellulose (CMC), sodium alginate (SA), polymethacrylic acid (PMA), and carboxymethyl chitosan (CMCS).

The positive electrode current collector may be made of a conductive carbon plate, a metal foil, a carbon-coated metal foil, a porous metal plate, or a composite current collector. The conductive carbon material of the conductive carbon plate is optionally one or more of super P, carbon black, Ketjen black, a carbon dot, a carbon nanotube, graphite, graphene, and a carbon nanofiber. The metal materials of the metal foil, the carbon-coated metal foil, and the porous metal plate are each independently selected from at least one of copper, aluminum, nickel, and stainless steel. The composite current collector may be a composite current collector formed by combining a metal foil and a polymer base film.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Negative Electrode Plate]

The negative electrode plate may only include a negative electrode current collector and does not include a negative electrode active material. The negative electrode plate may also have a metal phase pre-deposited on the negative electrode current collector.

In some embodiments, a metal foil or a composite current collector may be used as the negative electrode current collector. For example, as the metal foil, an aluminum foil or a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, the negative electrode plate includes a negative electrode current collector and a bottom coating formed on at least part of the surface of the negative electrode current collector.

In some embodiments, the bottom coating includes a conductive carbon coating. The conductive coating includes one or more of a single-walled carbon nanotube, a multi-walled carbon nanotube, hard carbon, super P, graphite, graphene, a silver-carbon composite nanoparticle, and a tin-carbon composite nanoparticle, and optionally includes one or more of a single-walled carbon nanotube and a multi-walled carbon nanotube.

The bottom coating described above not only has excellent electrical conductivity, but also is conducive to the uniform deposition of the metal ion on the surface of the current collector, thereby improving the cycle performance and safety of the battery.

In some embodiments, the areal density of the bottom coating is 5 g/m² to 50 g/m².

In some embodiments, the areal density of the bottom coating is optionally 5 g/m², 10 g/m², 15 g/m², 20 g/m², 25 g/m², 30 g/m², 35 g/m², 40 g/m², 45 g/m², 50 g/m², or a value in a range defined by any two of the values described above.

The bottom coating with an areal density of 5 g/m² to 50 g/m² is conducive to the uniform distribution of nucleation sites, promotes the uniform deposition of metals, and meanwhile, does not affect the transmission of electrons.

### [Separator]

In some embodiments, the secondary battery further includes a separator. The present application does not particularly limit the type of the separator, and any porous-structure separator known to have good chemical stability and mechanical stability may be selected and used.

In some embodiments, the material of the separator may be selected from at least one of polyethylene, polypropylene, polyvinylidene fluoride, aramid, polyethylene terephthalate, polytetrafluoroethylene, polyacrylonitrile, polyimide, polyamide, polyester, and a natural fiber. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate, the negative electrode plate, and the separator may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

### [Sodium Secondary Battery]

The sodium secondary battery may be in various forms. As an example, it includes, but is not limited to, a battery cell, a battery module, and a battery pack.

A battery cell includes the electrolytic solution according to some embodiments.

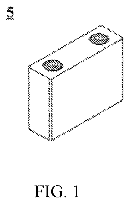

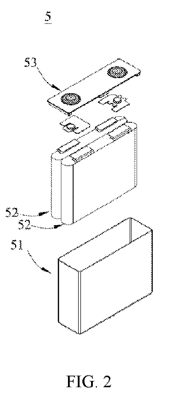

The present application does not particularly limit the shape of the battery cell, and it may have a cylindrical shape, a square shape, or any other shape. For example, FIG. 1 shows a battery cell 5 having a square structure as one example, and FIG. 2 is an exploded view of the battery cell 5.

In some embodiments, the sodium secondary battery cell further includes a positive electrode plate, a negative electrode plate, and a separator.

In some embodiments, the sodium secondary battery cell is a negative electrode-free sodium secondary battery.

The negative electrode-free sodium secondary battery refers to a battery formed without actively disposing a negative electrode active material layer on the negative electrode side during the manufacturing of the battery. For example, during the manufacturing of the battery, a sodium metal or carbonaceous active material layer is not disposed at the negative electrode by processes of coating, deposition, or the like to form a negative electrode active material layer. During the first charge, sodium ions gain electrons at the anode side and are deposited as sodium metal on the surface of the current collector to form a sodium metal phase. During discharge, the sodium metal can be converted into sodium ions and return to the positive electrode, thereby achieving cyclic charge and discharge. Compared with other sodium secondary batteries, the negative electrode-free sodium secondary battery may have a higher energy density due to the lack of a negative electrode active material layer.

In some embodiments, in order to enhance battery performance, some conventional substances that can be used as negative electrode active materials, such as carbonaceous materials, metal oxides, and alloys, may be disposed on the negative electrode side of the negative electrode-free sodium secondary battery. Although these materials have a certain capacity, they are not used as the main negative electrode active material in the battery due to their small amount, and therefore are not considered to form a negative electrode active material layer that plays a role in sodium intercalation. The sodium secondary battery thus constructed can still be considered as a negative electrode-free sodium secondary battery.

In some embodiments, the CB value of the negative electrode-free sodium secondary battery is smaller than or equal to 0.1.

The CB value is defined as the ratio of the capacity per unit area of the negative electrode plate to the capacity per unit area of the positive electrode plate in a secondary battery. Since the negative electrode-free battery includes no negative electrode active material, the unit area capacity of the negative electrode plate is relatively small, and the CB value of the secondary battery is less than or equal to 0.1.

In some embodiments, referring to FIG. 2, the outer packaging may include a housing 51 and a cover plate 53. The housing 51 may include a bottom plate and side plates connected to the bottom plate, and the bottom plate and the side plates define, in an enclosing manner, an accommodating cavity. The housing 51 is provided with an opening communicating with the accommodating cavity, and the cover plate 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The number of the electrode assemblies 52 included in the sodium secondary battery 5 may be one or more, and those skilled in the art can select the number according to specific and actual needs.

### [Battery Module]

According to some embodiments, the battery cell may be assembled into a battery module. The number of battery cells included in the battery module may be one or more, and the specific number may be selected by those skilled in the art based on the use and capacity of the battery module.

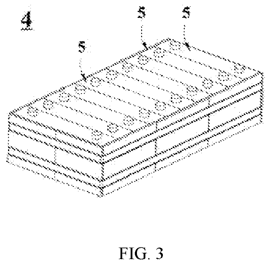

FIG. 3 shows a battery module 4 as an example. Referring to FIG. 3, in the battery module 4, a plurality of battery cells 5 may be sequentially disposed in a length direction of the battery module 4. Certainly, the arrangement may also be in any other manner. Further, the plurality of battery cells 5 may be fixed by fasteners.

Optionally, the battery module 4 may further include an outer shell having an accommodating space in which the plurality of battery cells 5 are accommodated.

### [Battery Pack]

In some embodiments, the battery module described above may also be assembled into a battery pack. The number of battery modules included in the battery pack may be one or more, and the specific number may be selected by those skilled in the art based on the use and capacity of the battery pack.

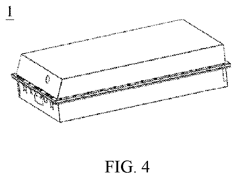

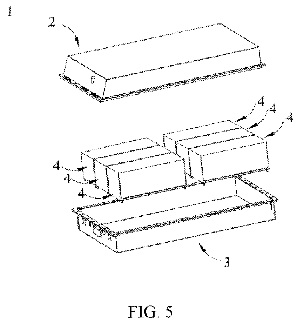

FIG. 4 and FIG. 5 show a battery pack 1 as an example. Referring to FIG. 4 and FIG. 5, the battery pack 1 may include a battery case and a plurality of battery modules 4 disposed in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

### [Electric Device]

In one embodiment of the present application, provided is an electric device, which includes at least one of the sodium secondary battery according to any embodiment, the battery module according to any embodiment, or the battery pack according to any embodiment.

The electric device includes at least one of the sodium secondary battery, the battery module, or the battery pack provided in the present application. The sodium secondary battery, the battery module, or the battery pack can be used as a power source for the electric device, and can also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a sodium secondary battery, a battery module, or a battery pack may be selected based on the use requirements of the electric device.

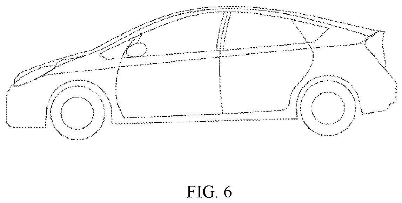

FIG. 6 shows an electric device as an example. The electric device is a pure electric vehicle, a hybrid electric vehicle, a plug-in hybrid electric vehicle, or the like. To meet the requirements of the electric device for high power and high energy density of the sodium secondary battery, a battery pack or a battery module may be used.

As another example, the device may be a mobile phone, a tablet computer, a laptop computer, or the like. The device is generally required to be light and thin, and a sodium secondary battery may thus be used as a power source.

### Examples

Hereinafter, examples of the present application are described. The examples described below are illustrative and merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

### I. Preparation Method

### Example 1

### 1) Electrolytic solution

In a glove box under argon atmosphere (H₂O < 0.1 ppm, O₂ < 0.1 ppm), 6% of the first sodium salt sodium trifluoromethanesulfonate (NaTOf) and 34% of the second sodium salt sodium hexafluorophosphate (NaPF₆) were dissolved in a first solvent diethylene glycol dimethyl ether (G2), and the mixture was uniformly stirred and mixed to prepare an electrolytic solution.

### 2) Preparation of positive electrode plate

The positive electrode active material Na₃V₂(PO₄)₃, a binder polyvinylidene fluoride (PVDF), and a conductive agent conductive carbon black (Super-P) were added to an N-methylpyrrolidone (NMP) solvent according to a mass ratio of 96%:2%:2%, and the mixture was uniformly mixed to prepare a positive electrode slurry. The surface of an aluminum foil was coated according to the requirement of mass per unit area of the positive electrode active material by using a slot-die coater, followed by drying, and then the coated electrode plate was subjected to cold pressing treatment by using a cold pressing machine at a designed compaction density of 2.5 g/cm³ to prepare a final positive electrode plate.

### 3) Preparation of negative electrode plate

A single-walled carbon nanotube and sodium alginate were added to deionized water, and the mixture was stirred to prepare a uniform slurry. A negative electrode current collector was coated with the slurry, followed by drying and cutting to obtain a negative electrode plate, where the areal density of the bottom coating was 25 g/m ².

### 4) Separator

A polypropylene film was used as the separator.

### 5) Preparation of battery

The positive electrode plate, the separator, and the negative electrode plate were stacked in sequence, with the separator placed between the positive electrode plate and the negative electrode plate for separation effect. Tabs were welded to a bare cell. The bare cell was then placed in an aluminum shell, which was then baked at 80 °C to remove water, injected with the electrolytic solution described above, and sealed to obtain an uncharged battery. The uncharged battery was then subjected to the processes of standing, hot and cold pressing, formation, shaping, capacity testing, and the like sequentially, thus obtaining the sodium secondary battery product of Example 1.

### Examples 2-29

The batteries of Examples 2-29 were prepared using a method substantially similar to that of Example 1, except that the parameters for preparing the electrolytic solution were adjusted. The specific parameters are shown in Table 1.

### Comparative Example 1

The battery of Comparative Example 1 was prepared using a method substantially similar to that of Example 1, except that the first solvent and the second solvent were not added, and a third solvent ethylene glycol diethyl ether (DEE) was added. The specific parameters are shown in Table 1.

### Comparative Example 2

The battery of Comparative Example 2 was prepared using a method substantially similar to that of Example 1, except that the first sodium salt was changed to sodium tetrafluoroborate (NaBF₄). The specific parameters are shown in Table 1.

### Comparative Example 3

The battery of Comparative Example 3 was prepared using a method substantially similar to that of Example 2, except that the first sodium salt was changed to sodium tetrafluoroborate (NaBF₄). The specific parameters are shown in Table 1.

### Comparative Example 4

The battery of Comparative Example 4 was prepared using a method substantially similar to that of Example 14, except that the first sodium salt was changed to sodium tetrafluoroborate (NaBF₄). The specific parameters are shown in Table 1.

### Comparative Example 5

The battery of Comparative Example 5 was prepared using a method substantially similar to that of Example 14, except that the first solvent was not added to the electrolytic solution, and the contents of the second solvent and the third solvent were correspondingly adjusted. The specific parameters are shown in Table 1.

### Comparative Example 6

The battery of Comparative Example 6 was prepared using a method substantially similar to that of Example 2, except that the mass contents of the first sodium salt, the first solvent, and the second solvent were adjusted, such that the mass ratio of the first sodium salt to the first solvent was less than 0.01. The specific parameters are shown in Table 1.

### Comparative Example 7

The battery of Comparative Example 7 was prepared using a method substantially similar to that of Example 2, except that the mass contents of the first sodium salt, the first solvent, and the second solvent were adjusted, such that the mass ratio of the first sodium salt to the first solvent was greater than 0.4. The specific parameters are shown in Table 1.

### II. Performance Test

### 1. Test of electrolytic solution performance

### 1) Low-temperature ionic conductivity

The ionic conductivity was measured by using a DDSJ-318 conductivity meter from Leici. An electrolytic solution was placed in a centrifuge tube and left to stand at -30 °C for 30 min under atmospheric pressure (0.1 MPa). The conductive electrode was washed with deionized water and rinsed with absolute ethanol to remove residual water. Followed by drying, the electrode was vertically inserted into a centrifuge tube containing the test electrolytic solution to ensure that the platinum electrode could be immersed below the liquid level of the test electrolytic solution. After the reading of the instrument was stabilized, the result was recorded. The measurement was repeated three times, and the mean value was taken.

### 2. Battery performance test

### 1) Low-temperature coulombic efficiency

At -30 °C and atmospheric pressure (0.1 MPa), the batteries were charged at a constant current of 0.1C to 3.5 V, and the charge capacities at this moment were recorded as the initial charge capacities of the batteries. The batteries were then left to stand for 5 min and discharged at a constant current of 0.1C until they were charged and discharged to 3.2 V. The batteries were left to stand for 5 min, and the discharge capacities at this moment were recorded as the initial discharge capacities of the batteries. The initial coulombic efficiency (%) of battery = initial discharge capacity/initial charge capacity × 100%.

### 2) Low-temperature cycle performance

The test was performed in two low-temperature environments of -30 °C and 0 °C (abbreviated as -30 °C/0 °C). At -30 °C/0 °C and atmospheric pressure (0.1 MPa), the batteries were charged at a constant current of 0.5C to a voltage of 3.5 V, and then discharged at a constant current of 1C to a voltage of 3.2 V, which was one charging and discharging cycle. With the initial discharge capacities being 100%, the charging and discharging cycle was repeated 500 times, at which time the test was stopped, and the cycle capacity retention rates were recorded. The capacity retention rates at -30 °C/0 °C were used as indicators for evaluating the low-temperature cycle performance of the batteries.

### 3) Room-temperature cycle performance

At 25 °C and atmospheric pressure (0.1 MPa), the batteries were charged at a constant current of 0.5C to a voltage of 3.5 V, and then discharged at a constant current of 1C to a voltage of 3.2 V, which was one charging and discharging cycle. With the initial discharge capacities being 100%, the charging and discharging cycle was repeated 500 times, at which time the test was stopped, and the cycle capacity retention rates were recorded. The capacity retention rates at 25 °C were used as indicators for evaluating the room-temperature cycle performance of the batteries.

### III. Analysis of Test Results of Examples and Comparative Examples

The batteries of the examples and comparative examples were prepared according to the methods described above, and various performance parameters were measured. The results are shown in Table 1 and Table 2 below.

**Table 1**

| Serial number | Electrolytic solution | | | | | | | | | | |
|---|---|---|---|---|---|---|---|---|---|---|---|
| | First sodium salt | | Second sodium salt | | First solvent | | Second solvent | | Third solvent | | Mass ratio of the first sodium salt to the first solvent |
| | Substance | Mass content/% | Substance | Mass content/% | Substance | Mass content/% | Substance | Mass content/% | Substance | Mass content/% | |
| Example 1 | NaOTf | 6 | NaPF₆ | 34 | G2 | 60 | / | / | / | / | 0.100 |
| Example 2 | NaOTf | 6 | NaPF₆ | 24 | G2 | 60 | DOL | 10 | / | / | 0.100 |
| Example 3 | NaOTf | 0.6 | NaPF₆ | 29.4 | G2 | 60 | DOL | 10 | / | / | 0.010 |
| Example 4 | NaOTf | 2 | NaPF₆ | 28 | G2 | 60 | DOL | 10 | / | / | 0.033 |
| Example 5 | NaOTf | 3 | NaPF₆ | 27 | G2 | 60 | DOL | 10 | / | / | 0.050 |
| Example 6 | NaOTf | 4 | NaPF₆ | 26 | G2 | 60 | DOL | 10 | / | / | 0.067 |
| Example 7 | NaOTf | 10 | NaPF₆ | 20 | G2 | 60 | DOL | 10 | / | / | 0.167 |
| Example 8 | NaOTf | 12 | NaPF₆ | 18 | G2 | 60 | DOL | 10 | / | / | 0.200 |
| Example 9 | NaOTf | 24 | NaPF₆ | 6 | G2 | 60 | DOL | 10 | / | / | 0.400 |
| Example 10 | NaOTf | 6 | NaPF₆ | 34 | G2 | 20 | DOL | 40 | / | / | 0.300 |
| Example 11 | NaOTf | 6 | NaPF₆ | 24 | G2 | 40 | DOL | 30 | / | / | 0.150 |
| Example 12 | NaOTf | 6 | NaPF₆ | 4 | G2 | 80 | DOL | 10 | / | / | 0.075 |
| Example 13 | NaOTf | 6 | NaPF₆ | 40 | G2 | 40 | DOL | 14 | / | / | 0.150 |
| Example 14 | NaOTf | 6 | NaPF₆ | 14 | G2 | 60 | DOL | 10 | DEE | 10 | 0.100 |
| Example 15 | NaOTf | 6 | NaBF₄ | 14 | G2 | 60 | DOL | 10 | DEE | 10 | 0.100 |
| Example 16 | NaOTf | 6 | NaAsF₆ | 14 | G2 | 60 | DOL | 10 | DEE | 10 | 0.100 |
| Example 17 | NaOTf | 6 | NaBPh₄ | 14 | G2 | 60 | DOL | 10 | DEE | 10 | 0.100 |
| Example 18 | NaOTf | 6 | NaFSI | 14 | G2 | 60 | DOL | 10 | DEE | 10 | 0.100 |
| Example 19 | NaOTf | 6 | NaPF₆ | 14 | G4 | 60 | DOL | 10 | DEE | 10 | 0.100 |
| Example 20 | NaOTf | 6 | NaPF₆ | 14 | G3 | 60 | DOL | 10 | DEE | 10 | 0.100 |
| Example 21 | NaOTf | 6 | NaPF₆ | 14 | G2 | 60 | Tetrahydrofuran | 10 | DEE | 10 | 0.100 |
| Example 22 | NaOTf | 6 | NaPF₆ | 14 | G2 | 60 | 1,4-dioxane | 10 | DEE | 10 | 0.100 |
| Example 23 | NaOTf | 6 | NaPF₆ | 14 | G2 | 60 | DOL | 10 | Ethylene glycol dipropyl ether | 10 | 0.100 |
| Example 24 | NaOTf | 6 | NaPF₆ | 14 | G2 | 60 | DOL | 10 | Propylene glycol dimethyl ether | 10 | 0.100 |
| Example 25 | NaOTf | 6 | NaPF₆ | 14 | G2 | 60 | DOL | 10 | DEE | 10 | 0.100 |
| Example 26 | NaOTf | 6 | NaPF₆ | 14 | G2 | 60 | DOL | 10 | DEE | 10 | 0.100 |
| Example 27 | NaOTf | 6 | NaPF₆ | 14 | G2 | 60 | DOL | 10 | DEE | 10 | 0.100 |
| Example 28 | NaOTf | 6 | NaPF₆ | 9 | G2 | 60 | DOL | 10 | DEE | 15 | 0.100 |
| Example 29 | NaOTf | 6 | NaPF₆ | 4 | G2 | 40 | DOL | 10 | DEE | 40 | 0.150 |
| Comparative Example 1 | NaOTf | 6 | NaPF₆ | 34 | / | / | / | / | DEE | 60 | / |
| Comparative Example 2 | NaBF₄ | 6 | NaPF₆ | 34 | G2 | 60 | / | / | / | / | 0.100 |
| Comparative Example 3 | NaBF₄ | 6 | NaPF₆ | 24 | G2 | 60 | DOL | 10 | / | / | 0.100 |
| Comparative Example 4 | NaBF₄ | 6 | NaPF₆ | 14 | G2 | 60 | DOL | 10 | DEE | 10 | 0.100 |
| Comparative Example 5 | NaOTf | 6 | NaPF₆ | 14 | / | / | DOL | 60 | DEE | 20 | / |
| Comparative Example 6 | NaOTf | 0.5 | NaPF₆ | 14.5 | G2 | 80 | DOL | 5 | / | / | 0.006 |
| Comparative Example 7 | NaOTf | 20 | NaPF₆ | 40 | G2 | 30 | DOL | 10 | / | / | 0.667 |

**Table 2**

| Serial number | Electrolytic solution | Negative electrode plate | Battery | | | |
|---|---|---|---|---|---|---|
| | Low-temperature ionic conductivity/(mS/cm) | Conductive coating | Cycle capacity retention rate (500 cycles) | | | Low-temperature coulombic efficiency |
| | | | -30 °C | 0 °C | 25 °C | |
| Example 1 | 2.25 | Single-walled carbon nanotube | 53.29% | 65.29% | 91.63% | 90.06% |
| Example 2 | 2.31 | Single-walled carbon nanotube | 64.36% | 68.71% | 91.26% | 91.23% |
| Example 3 | 0.14 | Single-walled carbon nanotube | 58.21% | 65.21% | 92.48% | 90.06% |
| Example 4 | 0.56 | Single-walled carbon nanotube | 60.14% | 67.89% | 92.35% | 90.08% |
| Example 5 | 0.74 | Single-walled carbon nanotube | 61.02% | 78.59% | 92.33% | 90.11% |
| Example 6 | 1.58 | Single-walled carbon nanotube | 61.26% | 82.06% | 91.90% | 90.07% |
| Example 7 | 3.61 | Single-walled carbon nanotube | 62.19% | 83.77% | 91.57% | 90.06% |
| Example 8 | 3.79 | Single-walled carbon nanotube | 61.33% | 81.06% | 90.89% | 90.10% |
| Example 9 | 4.68 | Single-walled carbon nanotube | 60.13% | 63.24% | 90.11% | 90.16% |
| Example 10 | 1.59 | Single-walled carbon nanotube | 61.77% | 68.19% | 91.09% | 90.20% |
| Example 11 | 1.98 | Single-walled carbon nanotube | 62.01% | 81.09% | 91.36% | 90.16% |
| Example 12 | 2.76 | Single-walled carbon nanotube | 62.35% | 76.31% | 91.73% | 90.17% |
| Example 13 | 2.36 | Single-walled carbon nanotube | 61.06% | 72.98% | 91.96% | 90.09% |
| Example 14 | 2.16 | Single-walled carbon nanotube | 84.13% | 86.34% | 91.36% | 99.67% |
| Example 15 | 2.19 | Single-walled carbon nanotube | 83.93% | 85.37% | 91.33% | 99.67% |
| Example 16 | 2.26 | Single-walled carbon nanotube | 83.29% | 85.06% | 91.06% | 99.66% |
| Example 17 | 2.24 | Single-walled carbon nanotube | 76.96% | 79.13% | 78.94% | 97.67% |
| Example 18 | 4.68 | Single-walled carbon nanotube | 74.39% | 77.01% | 78.31% | 98.12% |
| Example 19 | 2.17 | Single-walled carbon nanotube | 80.31% | 82.06% | 91.78% | 99.52% |
| Example 20 | 2.19 | Single-walled carbon nanotube | 78.69% | 80.19% | 91.78% | 99.16% |
| Example 21 | 2.3 | Single-walled carbon nanotube | 79.63% | 80.94% | 91.78% | 99.36% |
| Example 22 | 2.29 | Single-walled carbon nanotube | 78.59% | 80.04% | 91.78% | 99.47% |
| Example 23 | 2.19 | Single-walled carbon nanotube | 80.36% | 82.06% | 91.78% | 99.31% |
| Example 24 | 2.06 | Single-walled carbon nanotube | 81.60% | 83.11% | 91.78% | 99.39% |
| Example 25 | 2.16 | / | 76.16% | 79.01% | 86.34% | 99.06% |
| Example 26 | 2.16 | Multi-walled carbon nanotube | 80.18% | 81.97% | 90.16% | 99.64% |
| Example 27 | 2.16 | Graphene | 83.06% | 82.64% | 91.06% | 99.67% |
| Example 28 | 2.01 | Single-walled carbon nanotube | 82.22% | 85.79% | 90.84% | 99.23% |
| Example 29 | 1.75 | Single-walled carbon nanotube | 80.06% | 82.08% | 90.03% | 99.06%% |
| Comparative Example 1 | 0.03 | Single-walled carbon nanotube | Failure to cycle | Failure to cycle | 91.68% | Failure to discharge |
| Comparative Example 2 | 0.02 | Single-walled carbon nanotube | Failure to cycle | Failure to cycle | 91.98% | Failure to discharge |
| Comparative Example 3 | 0.02 | Single-walled carbon nanotube | Failure to cycle | Failure to cycle | 92.06% | Failure to discharge |
| Comparative Example 4 | 0.02 | Single-walled carbon nanotube | Failure to cycle | Failure to cycle | 92.11% | Failure to discharge |
| Comparative Example 5 | 0.02 | Single-walled carbon nanotube | Failure to cycle | Failure to cycle | 76.54% | Failure to discharge |
| Comparative Example 6 | 0.02 | Single-walled carbon nanotube | Failure to cycle | Failure to cycle | 91.08% | Failure to discharge |
| Comparative Example 7 | 2.02 | Single-walled carbon nanotube | 44.33% | 60.21% | 80.22% | 90.13% |

As can be seen from the results described above, the electrolytic solutions in Examples 1-29 all include the first sodium salt and the first solvent. The first sodium salt includes sodium trifluoromethanesulfonate, the first solvent includes diethylene glycol dimethyl ether, triethylene glycol dimethyl ether, or tetraethylene glycol dimethyl ether, and the mass ratio of the first sodium salt to the first solvent is 0.01-0.4.

As can be seen from the comparisons of Example 1 with Comparative Examples 1-2, Example 2 with Comparative Example 3, and Examples 14-27 with Comparative Examples 4-5, compared with the case that the electrolytic solution does not include sodium trifluoromethanesulfonate or the first solvent, the electrolytic solutions in the examples of the present application include both sodium trifluoromethanesulfonate and the first solvent, which is conducive to improving the ionic conductivity of the electrolytic solutions at -30 °C, and improving the cycle performance at -30 °C/0 °C and the coulombic efficiency at -30 °C of the batteries adopting the electrolytic solutions. Moreover, the use of sodium trifluoromethanesulfonate in combination with the first solvent also enables the losses of the cycle capacity retention rates of the batteries to be within a low range in the case that the temperatures of the batteries are lowered from 0 °C to -30 °C, thereby expanding the temperature window of the batteries.

As can be seen from the comparison of Examples 2-13 with Comparative Examples 6-7, controlling the mass ratio of the first sodium salt to the first solvent to be 0.01-0.4 is conducive to further improving the cycle performance of the batteries at -30 °C/0 °C, and significantly improving the low-temperature cycle performance of the batteries. As can be seen from the comparison of Examples 2, 5-8, and 11-13 with Examples 3-4 and 9-10, further controlling the mass ratio of the first sodium salt to the first solvent to be 0.05-0.2 can balance the ionic conductivity of the electrolytic solutions at -30 °C, as well as the cycle performance at -30 *°C*/*0* °C and the coulombic efficiency at -30 °C of the batteries adopting the electrolytic solutions.

As can be seen from the comparison between Example 2 with Example 1, the introduction of the second solvent is conducive to improving the ionic conductivity of the electrolytic solution at -30 °C, and improving the cycle performance at -30 *°C*/*0* °C and the coulombic efficiency at -30 °C of the battery adopting the electrolytic solution.

As can be seen from Examples 2-9, based on the total mass of the electrolytic solution, the mass contents of the first sodium salts are controlled to be 0.6%-24%, such that the electrolytic solutions have excellent ionic conductivity at -30 °C, and the batteries adopting the first sodium salts have excellent cycle performance at -30 *°C*/*0* °C, excellent cycle performance at 25 °C, and excellent coulombic efficiency at -30 °C. As can be seen from the comparison of Examples 2 and 4-8 with Examples 3 and 9, based on the total mass of the electrolytic solution, further controlling the mass contents of the first sodium salts to be 2%-12% are conducive to further improving the cycle performance at -30 *°C*/*0* °C and the coulombic efficiency at -30 °C of the batteries adopting the electrolytic solutions.

As can be seen from Examples 2-13, based on the total mass of the electrolytic solution, the mass contents of the second sodium salts are controlled to be 3%-40%, such that the electrolytic solutions have excellent ionic conductivity at -30 °C, and the batteries adopting the electrolytic solutions have excellent cycle performance at -30 °C/0 °C, excellent cycle performance at 25 °C, and excellent coulombic efficiency at -30 °C.

As can be seen from Examples 2 and 10-12, based on the total mass of the electrolytic solution, the mass contents of the first solvents are controlled to be no less than 20%, such that the electrolytic solutions have excellent ionic conductivity at -30 °C, and the batteries adopting the electrolytic solutions have excellent cycle performance at -30 *°C*/*0* °C, excellent cycle performance at 25 °C, and excellent coulombic efficiency at -30 °C. As can be seen from the comparison of Examples 2 and 11-12 with Example 10, based on the total mass of the electrolytic solution, further controlling the mass contents of the first solvents to be 40%-80% is conducive to improving the ionic conductivity of the electrolytic solutions at -30 °C, and improving the cycle performance at -30 °C/0 °C and the cycle performance at 25 °C of the batteries.

As can be seen from the comparison of Example 14 with Example 2, the introduction of the third solvent is conducive to improving the cycle performance at -30 *°C*/*0* °C, the cycle performance at 25 °C, and the coulombic efficiency at -30 °C of the battery adopting the electrolytic solution.

As can be seen from Examples 14-18, the second sodium salt includes sodium hexafluorophosphate, sodium tetrafluoroborate, sodium hexafluoroarsenate, sodium tetraphenylboron, or sodium bis(fluorosulfonyl)imide, all of which enable the electrolytic solutions to have excellent ionic conductivity at -30 °C, and enable the battery adopting the electrolytic solutions to have excellent cycle performance at -30 °C/0 °C, excellent cycle performance at 25 °C, and excellent coulombic efficiency at -30 °C.

As can be seen from Examples 14 and 19-20, the first solvent includes diethylene glycol dimethyl ether, triethylene glycol dimethyl ether, or tetraethylene glycol dimethyl ether, all of which enable the electrolytic solutions to have excellent ionic conductivity at -30 °C, and enable the batteries adopting the electrolytic solutions to have excellent cycle performance at - 30 °C/0 °C, excellent cycle performance at 25 °C, and excellent coulombic efficiency at -30 °C.

As can be seen from the comparison of Example 2 with Example 1, the electrolytic solution including the second solvent is conducive to improving the cycle performance at - 30 *°C*/*0* °C and the coulombic efficiency at -30 °C of the battery.

As can be seen from Examples 14 and 21-22, the second solvent includes 1,3-dioxolane, 1,4-dioxane, or tetrahydrofuran, all of which enable the electrolytic solutions to have excellent ionic conductivity at -30 °C, and enable the batteries adopting the electrolytic solutions to have excellent cycle performance at -30 *°C*/*0* °C, excellent cycle performance at 25 °C, and excellent coulombic efficiency -30 °C.

As can be seen from the comparison of Example 14 with Example 2, the electrolytic solution including the third solvent is conducive to improving the cycle performance at - 30 *°C*/*0* °C, the cycle performance at 25 °C, and the coulombic efficiency at -30 °C of the battery. As can be seen from Examples 14 and 23-24, the third solvent includes ethylene glycol diethyl ether, ethylene glycol dipropyl ether, or propylene glycol dimethyl ether, all of which enable the electrolytic solutions to have excellent ionic conductivity at -30 °C, and enable the batteries adopting the electrolytic solutions to have excellent cycle performance at -30 °C/0 °C, excellent cycle performance at 25 °C, and excellent coulombic efficiency at -30 °C.

As can be seen from the comparison of Examples 14 and 26-27 with Example 25, the negative electrode plates with a bottom coating are conducive to improving the cycle performance at -30 °C/0 °C, the cycle performance at 25 °C, and the coulombic efficiency at - 30 °C of the batteries adopting the negative electrode plates.

As can be seen from Examples 14 and 28-29, based on the total mass of the electrolytic solution, the mass contents of the third solvents are controlled to be no less than 10%, such that the electrolytic solutions have excellent low-temperature ionic conductivity, and the batteries adopting the electrolytic solutions have excellent cycle performance at -30 *°C*/*0* °C, excellent cycle performance at 25 °C, and excellent coulombic efficiency at -30 °C.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. An electrolytic solution for a sodium secondary battery, comprising a first sodium salt and a first solvent, the first sodium salt comprising sodium trifluoromethanesulfonate, and the first solvent having a structure represented by formula I: 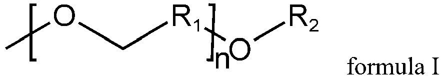
wherein, R₁ and R₂ each independently comprise CH₂ or CH₂CH₂, and n = 1, 2, 3, or 4;
a mass ratio of the first sodium salt to the first solvent is 0.01-0.4.

2. The electrolytic solution according to claim 1, wherein the electrolytic solution further comprises a second sodium salt, the second sodium salt comprising one or more of sodium bis(fluorosulfonyl)imide, sodium hexafluorophosphate, sodium tetrafluoroborate, sodium hexafluoroarsenate, and sodium tetraphenylboron, and optionally comprising one or more of sodium hexafluorophosphate, sodium tetrafluoroborate, sodium hexafluoroarsenate, and sodium tetraphenylboron.

3. The electrolytic solution according to claim 2, wherein based on a total mass of the electrolytic solution, a mass content of the first sodium salt is 0.6%-24%, and optionally 2%-12%; and/or
based on the total mass of the electrolytic solution, a mass content of the second sodium salt is 3%-40%, and optionally 8%-20%.

4. The electrolytic solution according to any one of claims 1-3, wherein the first solvent comprises one or more of diethylene glycol dimethyl ether, triethylene glycol dimethyl ether, and tetraethylene glycol dimethyl ether, and optionally comprises diethylene glycol dimethyl ether.

5. The electrolytic solution according to any one of claims 1-4, wherein the mass ratio of the first sodium salt to the first solvent is 0.05-0.2.

6. The electrolytic solution according to any one of claims 1-5, wherein based on the total mass of the electrolytic solution, a mass content of the first solvent is no less than 20%, and optionally 40%-80%.

7. The electrolytic solution according to any one of claims 1-6, wherein the electrolytic solution further comprises a second solvent, a freezing point of the second solvent is lower than a freezing point of the first solvent, and optionally, the freezing point of the second solvent is lower than -65 °C.

8. The electrolytic solution according to claim 7, wherein the second solvent comprises a cyclic ether solvent, the cyclic ether solvent comprising one or more of 1,3-dioxolane, 1,4-dioxane, tetrahydrofuran, and methyl tetrahydrofuran, and optionally comprising 1,3-dioxolane; and/or
based on the total mass of the electrolytic solution, a mass content of the second solvent is no less than 10%, and optionally 20%-70%.

9. The electrolytic solution according to any one of claims 1-8, wherein the electrolytic solution further comprises a third solvent, and a binding force between the third solvent and an anion of the first sodium salt is greater than a binding force between the first solvent and an anion of the first sodium salt.

10. The electrolytic solution according to claim 9, wherein the third solvent comprises one or more of ethylene glycol diethyl ether, ethylene glycol dipropyl ether, propylene glycol dimethyl ether, and diethylene glycol diethyl ether, and optionally comprises one or more of ethylene glycol diethyl ether and diethylene glycol diethyl ether; and/or
based on the total mass of the electrolytic solution, a mass content of the third solvent is no less than 10%, and optionally 15%-40%.

11. A sodium secondary battery, comprising the electrolytic solution according to any one of claims 1-10.

12. The sodium secondary battery according to claim 11, wherein the sodium secondary battery is a negative electrode-free sodium secondary battery.

13. The sodium secondary battery according to claim 11 or 12, wherein the sodium secondary battery comprises a negative electrode plate, the negative electrode plate comprising a negative electrode current collector and a bottom coating formed on at least part of a surface of the negative electrode current collector.

14. The secondary battery according to claim 13, wherein the bottom coating comprises a conductive carbon coating, the conductive carbon coating comprising one or more of a single-walled carbon nanotube, a multi-walled carbon nanotube, hard carbon, super P, graphite, graphene, a silver-carbon composite nanoparticle, and a tin-carbon composite nanoparticle, and optionally comprising one or more of a single-walled carbon nanotube and a multi-walled carbon nanotube.

15. The secondary battery according to claim 14, wherein an areal density of the conductive carbon coating is 5 g/m² to 50 g/m².

16. An electric device, comprising the sodium secondary battery according to any one of claims 11-15.
